# EUROPÄISCHE PATENTANMELDUNG

(11) **EP 1 080 677 A1**
(43) Veröffentlichungstag der Anmeldung: **07.03.2001**
(21) Anmeldenummer: 00118636.0
(22) Anmeldetag: 29.08.2000
(51) Int. Cl.: A47J 37/06

(54) **Elektrogrill**

(30) Priorität: 03.09.1999 DE 29915464 U
(71) Anmelder: AKO-ISMET Elektrogeräte GmbH & Co. KG, 90431 Nürnberg (DE)
(72) Erfinder: Illerhaus, Edmund, 88368 Bergatreute (DE)
(74) Vertreter: Rau, Albrecht

(57) **Zusammenfassung**

Elektrogrill mit einem Gehäuse (1), mindestens zwei elektrischen Heiz-Elementen (7, 8), die an dem Gehäuse (1) angeordnet und unabhängig voneinander regelbar sind, und einem Rost (6), der benachbart zu den mindestens zwei Heiz-Elementen (7,8) angeordnet und durch das Gehäuse (1) abgestützt ist.

## Beschreibung

Die Erfindung betrifft einen Elektrogrill.

Elektrogrills mit einer einheitlichen Beheizung des Rostes sind seit langem bekannt. Soll parallel zum eigentlichen Grillvorgang bereits fertiges Grillgut warmgehalten werden, so ist es hierfür durch offenkundige Vorbenutzung bekannt, oberhalb des Rostes im Warmluftstrom ein Gitter vorzusehen, das der Aufnahme des warmzuhaltenden Grillgutes dient. Nachteilig ist hieran, daß dieses Gitter häufig beim eigentlichen Grillen im Wege steht und eine Umlagerung des Grillgutes erforderlich ist.

Der Erfindung liegt die Aufgabe zugrunde, einen Elektrogrill bereitzustellen, bei dem gleichzeitig Grillgut gegrillt und fertiges Grillgut warmgehalten werden kann.

Die Aufgabe wird durch die Merkmale des Anspruches 1 gelöst. Der Kern der Erfindung besteht darin, einen Elektrogrill mit zwei unabhängig voneinander regelbaren elektrischen Heiz-Elementen auszustatten.

Weitere Ausgestaltungen der Erfindung ergeben sich aus den Unteransprüchen.

Zusätzliche Merkmale und Einzelheiten der Erfindung ergeben sich aus der Beschreibung eines Ausführungsbeispieles anhand der Zeichnung. Es zeigen
- Fig.1: einen Elektrogrill mit einer Rost-Hälfte und
- Fig. 2: einen Elektrogrill ohne Rost.

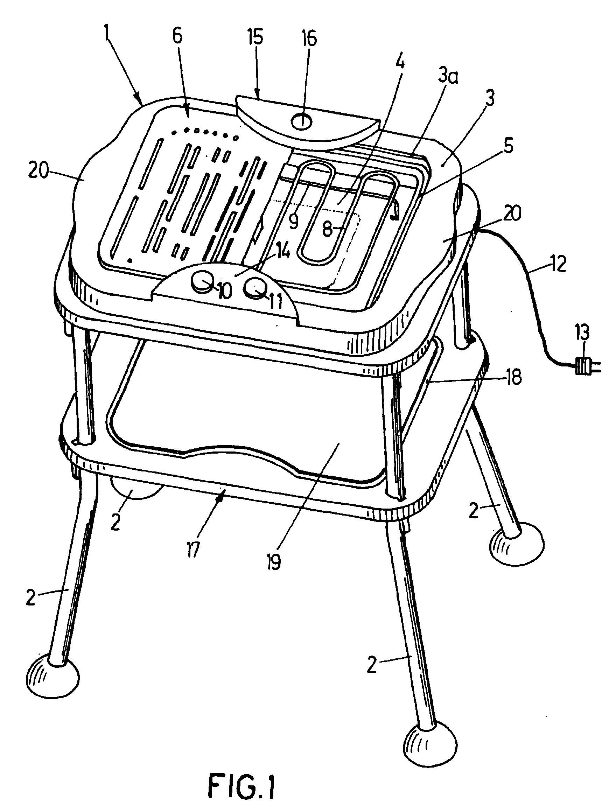

Ein Elektrogrill weist ein in Draufsicht von oben im wesentlichen rechteckiges Gehäuse 1 auf; das im Bereich der Ecken über vier damit verbundene Beine 2 gegenüber dem Boden abgestützt ist. Das Gehäuse 1 weist einen Rahmen 3 mit einer mittig angeordneten, im wesentlichen rechteckigen Ausnehmung 3a auf. In die Ausnehmung 3a ist eine Bodenwanne 4 eingesetzt. Zwischen der Bodenwanne 4 und dem Rahmen 3 ist die Bodenwanne 4 umgebend eine Auflagekante 5 zur Aufnahme eines Rostes 6 vorgesehen. Der Rost 6 weist zueinander parallele Rippen auf und ist als Aluminiumgußteil ausgebildet. Wie in Fig. 1 dargestellt, ist der Rost 6 zweiteilig ausgebildet, wobei in Fig. 1 nur die linke Hälfte des Rostes 6 gezeigt ist.

Im Innenraum der Bodenwanne 4 sind zwei als Elektro-Infrarot-Glühstäbe ausgebildete Heiz-Elemente 7, 8 vorgesehen. Die Glühstäbe sind in der Form eines ebenen Mäanders geschwungen und an einem Ende durch einen Träger 9 gegenüber der Bodenwanne 4 abgestützt. An ihrem anderen Ende sind die Heizelemente 7, 8 an einer mit dem Rahmen 3 verbundenen Konsole 14 befestigt und über Drehknöpfe 10, 11 aufweisende Leistungs-Regler und ein Verbindungskabel 12 mit Stecker 13 mit dem elektrischen Strom-Netz verbindbar. Die Drehknöpfe 10, 11 sind an der Konsole 14 angeordnet. Durch ein stufenloses Verdrehen der Drehknöpfe 10, 11 kann die Heizleistung der Heiz-Elemente 7 bzw. 8 unabhängig voneinander eingestellt werden. Dies hat den Vorteil, daß beispielsweise auf der Hälfte des Rostes 6 über dem Heiz-Element 7 bei voller Leistung gegrillt werden kann, während auf der Hälfte des Rostes 6 über dem Heiz-Element 8 Grillgut lediglich warmgehalten wird und umgekehrt. Durch ein stufenloses Verdrehen der Drehknöpfe 10, 11 kann die Heizleistung der Heiz-Elemente 7 bzw. 8 zwischen 0 % und 100 % ,der maximal möglichen Leistung, geregelt werden.

Auf der den Drehknöpfen 10, 11 gegenüberliegenden Seite des Rahmens 3 ist eine weitere Konsole 15 angeordnet, die mittig eine Öffnung 16 zum Einfüllen von Wasser in die Bodenwanne 4 aufweist. Das in die Bodenwanne 4 eingefüllte Wasser berührt die Heiz-Elemente 7, 8 nicht und verhindert, daß Fett, das in die Bodenwanne 4 tropft, durch die Hitze der Heizelemente 7, 8 verdampft wird, was sonst zu einer unerwünschten Rauchentwicklung und Geruchsbelästigung führt.

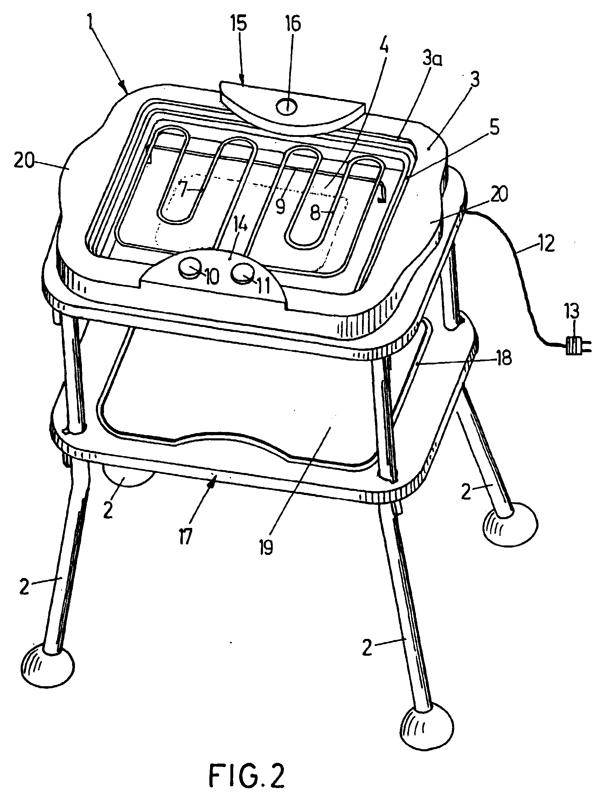

Unterhalb des Rahmens 3 ist ein weiterer Rahmen 17 vorgesehen, der an den vier Beinen 2 befestigt ist. Der Rahmen 17 weist eine zu der Ausnehmung 3a identische Ausnehmung 18 auf. In die Ausnehmung 18 ist eine Abdeckhaube 19 eingehängt, in der bei der in den Fig. 1 und 2 gezeigten Anordnung vorbereitetes Grillgut und Grillwerkzeuge gelagert werden können. Die Abdeckhaube 19 kann jedoch auch aus dem Rahmen 17 herausgenommen werden und zur Abdeckung der Bodenwanne 4 und der Heiz-Elemente 7, 8 verwendet werden. Zur Vereinfachung des Transportes des Elektrogrills sind an zwei gegenüberliegenden Seiten des Rahmens 3 Handgriffe 20 vorgesehen.

## Patentansprüche

1. Elektrogrill mit
a) einem Gehäuse (1),
b) mindestens zwei elektrischen Heiz-Elementen (7, 8), die
i) an dem Gehäuse (1) angeordnet und
ii) unabhängig voneinander regelbar sind,
c) und einem Rost (6), der
i) benachbart zu den mindestens zwei Heiz-Elementen (7, 8) angeordnet und
ii) durch das Gehäuse (1) abgestützt ist.

2. Elektrogrill gemäß Anspruch 1, **dadurch gekennzeichnet, daß** jedem Heizelement (7, 8) ein Leistungs-Regler zugeordnet ist.

3. Elektrogrill gemäß Anspruch 2, **dadurch gekennzeichnet, daß** die Leistungs-Regler als Drehregler mit Drehknöpfen (10, 11) zur Regelung der Heizleistung jedes Heiz-Elements (7, 8) ausgebildet sind.

4. Elektrogrill gemäß einem der vorangehenden Ansprüche, **dadurch gekennzeichnet, daß** die Heiz-Elemente (7, 8) als Infrarot-Glühstäbe ausgebildet sind.

5. Elektrogrill gemäß Anspruch 1, **dadurch gekennzeichnet, daß** der Rost (6) zweiteilig ausgebildet ist.

6. Elektrogrill gemäß einem der vorangehenden Ansprüche, **dadurch gekennzeichnet, daß** das Gehäuse (1) eine Bodenwanne (4) zur Aufnahme von Wasser aufweist.

7. Elektrogrill gemäß Anspruch 6, **dadurch gekennzeichnet, daß** die Heiz-Elemente (7, 8) gegenüber der Bodenwanne (4) durch einen Träger (9) abgestützt sind.

8. Elektrogrill gemäß Anspruch 6 oder 7, **dadurch gekennzeichnet, daß** am Gehäuse (1) eine Öffnung (16) zum Einfüllen von Wasser in die Bodenwanne (4) vorgesehen ist.
